# EUROPEAN PATENT APPLICATION

(11) **EP 1 986 026 A1**
(43) Date of publication of application: **29.10.2008**
(21) Application number: 06714512.8
(22) Date of filing: 24.02.2006
(51) Int. Cl.: G02B 6/24

(54) **MECHANICAL SPLICE**

(30) Priority: 13.02.2006 JP 2006000924 U
(71) Applicant: Uranus Co., Ltd., Tokyo 111-0032 (JP)
(72) Inventor: HIGUCHI, Itoko, Tokyo 111-0032 (JP)
(74) Representative: Hirsz, Christopher Stanislaw
(86) International application number: PCT/JP2006/303373
(87) International publication number: WO 2007/094081

(57) **Abstract**

A first lever (8) that is rotatable from a position in which an optical fiber can be inserted to a position in which the optical fiber is fixed is provided to one end of the housing (2), and a second lever (9) that is rotatable from the position in which the optical fiber can be inserted to the position in which the optical fiber is fixed is provided to the other end of the housing (2), in order to fix to the housing (2) the optical fibers (17) and (18) that are accommodated in the housing (2). When the first lever (8) moves from the position in which the optical fiber can be inserted to the position in which the optical fiber is fixed, the end portion of the optical fiber (17) is fed to the end portion of the optical fiber (18) and fixed to housing (2). When the second lever (9) moves from the position in which the optical fiber can be inserted to the position in which the optical fiber is fixed, the end portion of the optical fiber (18) is fed to the end portion of the optical fiber (17) and fixed to housing (2).

## Description

### BACKGROUND OF THE INVENTION

### 1. Field of the Invention

The present invention relates to a mechanical splice for mechanically connecting optical fibers.

### 2. Description of the Related Art

A guide groove substrate, a pressing substrate, and an optical fiber holding member for holding these substrates are used as a conventional mechanical splice (Japanese Laid-open Patent Application No. 2004-264755)

The guide groove substrate has a guide groove for guiding opposing optical fibers so that they are pushed against each other and are positioned and aligned. The guide groove is a V groove (groove with a cross-sectional V-shape).

The pressing substrate has a pressing surface for pressing the optical fibers that have been inserted in the groove.

The optical fiber holding member is a plate spring with a substantially U-shaped cross section.

Following is a description of the procedure for connecting optical fibers in which this mechanical splice is used.

First, the guide groove substrate and the pressing substrate are superimposed so that the guide groove of the guide groove substrate and the pressing surface of the pressing substrate are in opposition, and the two substrates are held by the optical fiber holding member. Next, a wedge is inserted between the guide groove substrate and the pressing substrate. A pair of optical fibers is then inserted in the guide groove, and the end faces of the optical fibers are pressed together. Lastly, the wedge inserted between the guide groove substrate and pressing substrate is removed. As a result, the pair of optical fibers is held by the spring force of the optical fiber holding member, and the optical fibers are mechanically connected to each other.

The mechanical splice described above has the following problems.

When the wedge inserted between the guide groove substrate and the pressing substrate is removed, the end face of the optical fiber lifts from the guide groove, the end face of the optical fiber of the guide groove retracts, and the optical fibers cannot be correctly connected.

Even if the optical fibers are correctly connected, the optical fibers readily come apart even when a slight external force is exerted for some reason in the separation direction of the optical fiber.

This invention was contrived in view of the above situation, and an object of this invention is to provide a mechanical splice that allows optical fibers to be reliably connected with each other and makes it difficult for the connected optical fibers to disconnect.

### SUMMARY OF THE INVENTION

The mechanical splice of this invention comprises a housing for accommodating the end portion of a first optical fiber and the end portion of a second optical fiber to be connected thereto, and optical fiber fixing means for fixing to the housing the two optical fibers accommodated in the housing, wherein the optical fiber fixing means has a first movable member which is mounted on one end of the housing and which feeds the end portion of the first optical fiber to the end portion of the second optical fiber, and fixes the end portion of the first optical fiber to the housing when the first movable member has moved from a position in which the optical fiber can be inserted to a position in which the optical fiber is fixed, and a second movable member which is mounted on the other end of the housing and which feeds the end portion of the second optical fiber to the end portion of the first optical fiber, and fixes the second optical fiber to the housing when the second movable member has moved from the position in which the optical fiber can be inserted to the position in which the optical fiber is fixed.

The optical fiber fixing means described above has a first movable member which is mounted on one end of the housing and which feeds the end portion of the first optical fiber to the end portion of the second optical fiber, and fixes the end portion of the first optical fiber to the housing when the first movable member has moved from a position in which the optical fiber can be inserted to a position in which the optical fiber is fixed, and a second movable member which is mounted on the other end of the housing and which feeds the end portion of the second optical fiber to the end portion of the first optical fiber, and fixes the second optical fiber to the housing when the second movable member has moved from the position in which the optical fiber can be inserted to the position in which the optical fiber is fixed. Therefore, if the first and second movable members are moved from the position in which the optical fiber can be inserted to the position in which the optical fiber is fixed in a state in which the two optical fibers are accommodated in the housing, the end portions of the two optical fibers are reliably pushed together by the feeding portions of the first and second movable members, and this state is maintained by the presser portions of the first and second moveable members.

The housing preferably has a fiber-receiving hole for accommodating the end portions of the two optical fibers, and the fiber-receiving hole has a first pre-compression space for bending the end portion of the first optical fiber, and a second pre-compression space for bending the end portion of the second optical fiber.

Preferably, the first and second movable members are both rotatable levers; the first movable member has a first engagement portion for engaging one end of the housing when the first movable member has rotated from the position in which the optical fiber can be inserted to the position in which the optical fiber is fixed, a first feeding portion for biting into the covering of the first optical fiber midway through the rotation from the position in which the optical fiber can be inserted to the position in which the optical fiber is fixed, and feeding the first optical fiber to the end portion of the second optical fiber, and a first pressing portion for pressing the first optical fiber against the internal peripheral surface of the fiber-receiving hole when the first movable member has rotated from the position in which the optical fiber can be inserted to the position in which the optical fiber is fixed; and the second movable member has a second engagement portion for engaging the other end of the housing when the second movable member has rotated from the position in which the optical fiber can be inserted to the position in which the optical fiber is fixed, a second feeding portion for biting into the covering of the second optical fiber midway through the rotation from the position in which the optical fiber can be inserted to the position in which the optical fiber is fixed, and feeding the second optical fiber to the end portion of the first optical fiber, and a second pressing portion for pressing the second optical fiber against the internal peripheral surface of the fiber-receiving hole when the second movable member has rotated from the position in which the optical fiber can be inserted to the position in which the optical fiber is fixed.

The metal sleeve for guiding the two optical fibers so that the strands of the two optical fibers make mutual contact is preferably accommodated between the first pre-compression space and the second pre-compression space within the fiber-receiving hole.

The first and second movable members preferably have a hook portion for engaging an engagement pawl that is formed on the housing, when the first and second movable members have moved from a position in which the optical fiber can be inserted to a position in which the optical fiber is fixed.

The housing preferably has a restriction portion for restricting the sliding of the first and second movable members disposed in the position in which the optical fiber can be inserted.

In accordance with the present invention, optical fibers can be reliably connected with each other, and the connected optical fiber cannot be easily disconnected.

### BRIEF DESCRIPTION OF THE DRAWINGS

FIG. 1A is a rear view of the mechanical splice of an embodiment of this invention;
FIG. 1B is a plan view of the mechanical splice of the same;
FIG. 2A is a cross-sectional view along the A-A line of FIG. 1B;
FIG. 2B is a side view of the mechanical splice of FIG. 1;
FIG. 3 is a bottom view of the mechanical splice of FIG. 1;
FIG. 4A is a rear view of the first housing component of the housing of the mechanical splice of FIG. 1;
FIG. 4B is a plan view of the first housing component of the same;
FIG. 5A is a cross-sectional view along the line B-B of FIG. 4B;
FIG. 5B is a bottom view of the first housing component of FIG. 4;
FIG. 6A is a cross-sectional view along the line C-C of FIG. 4B;
FIG. 6B is a cross-sectional view along the line D-D of FIG. 4B;
FIG. 6C is a cross-sectional view along the line E-E of FIG. 4B;
FIG. 6D is a cross-sectional view along the line F-F of FIG. 4B;
FIG. 6E is a side view of the first housing component of FIG. 4;
FIG. 7A is a rear view of the second housing component of the housing of the mechanical splice of FIG. 1;
FIG. 7B is a plan view of the second housing component of the same;
FIG. 8A is a cross-sectional view along the line G-G of FIG. 7B;
FIG. 8B is a bottom view of the second housing component of FIG. 7;
FIG. 9A is a cross-sectional view along the line H-H of FIG. 7B;
FIG. 9B is a cross-sectional view along the line I-I of FIG. 7B;
FIG. 9C is a cross-sectional view along the line J-J of FIG. 7B;
FIG. 10A is a plan view of the third housing component of the housing of the mechanical splice of FIG. 1;
FIG. 10B is a front view of the third housing component of the same;
FIG. 10C is a cross-sectional view along the line K-K of FIG. 10A;
FIG. 10D is a bottom view of the third housing component of the same;
FIG. 10E is a side view of the third housing component of the same;
FIG. 10F is a cross-sectional view along the line L-L of FIG. 10A;
FIG. 11 is a cross-sectional view of the state in which the lever of mechanical splice of FIG. 1 is locked;
FIG. 12A is a plan view of the lever of the mechanical splice of FIG. 1; and
FIG. 12B is a front view of the lever of the same.

### [Key]

- 1: Mechanical splice
- 2: Housing
- 3: First housing component
- 43: Protrusion (restriction portion)
- 5: Second housing component
- 6: Third housing component
- 7: Fourth housing component
- 8: Lever (first movable member)
- 82: Hook portion (first latching portion)
- 83: Pressing portion (wherein a feeding portion and a presser portion are integrally formed)
- 9: Lever (second movable member)
- 92: Hook portion (second latching portion)
- 93: Pressing portion (wherein a feeding portion and a presser portion are integrally formed)
- 11: First optical fiber insertion hole
- 12: Second optical fiber insertion hole
- 13: Sleeve insertion hole
- 14: Optical fiber receiving hole
- 15: First pre-compression space
- 16: Second pre-compression space
- 17: First optical fiber
- 18: Second optical fiber

### DESCRIPTION OF THE PREFERRED EMBODIMENTS

The embodiments of this invention are described below with reference to the drawings.

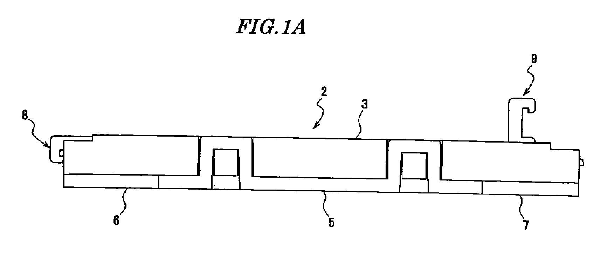

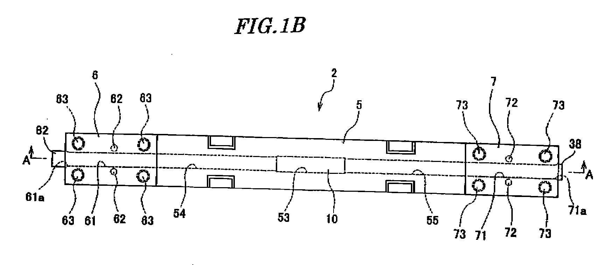

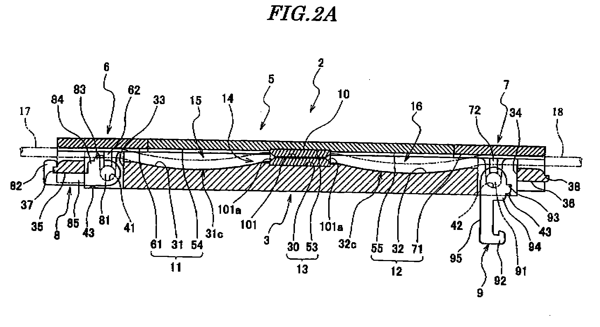

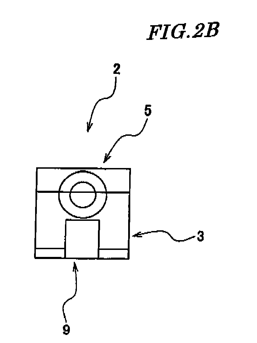

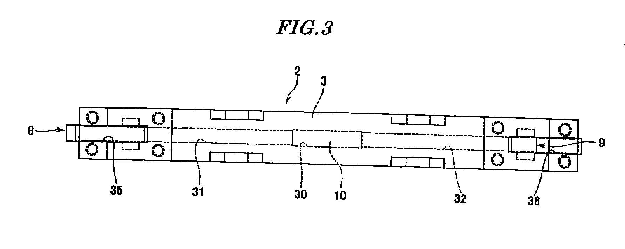

FIG. 1A is a rear view of the mechanical splice of an embodiment of this invention. FIG. 1B is a plan view of the mechanical splice of the same. FIG. 2A is a cross-sectional view along the A-A line of FIG. 1B. FIG. 2B is a side view of the mechanical splice of FIG. 1. FIG. 3 is a bottom view of the mechanical splice of FIG. 1.

The mechanical splice is provided with a housing 2 and a pair of levers (optical fiber fixing means) 8 and 9 that are disposed on the two ends of the housing 2, as shown in FIGS. 1 to 3.

The housing 2 is composed of a first housing component 3, a second housing component 5, a third housing component 6, and a fourth housing component 7.

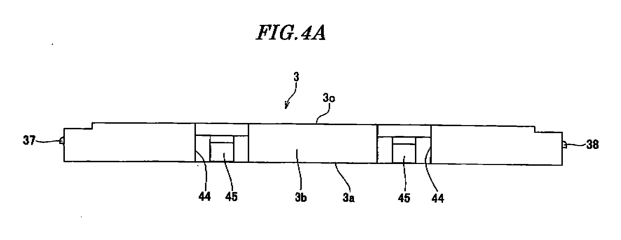

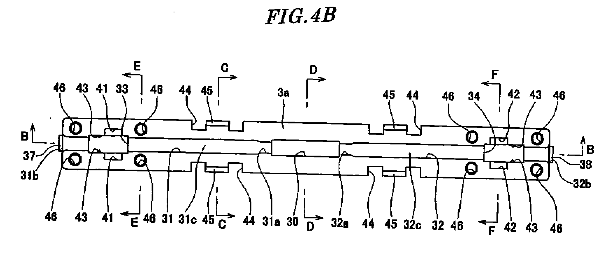

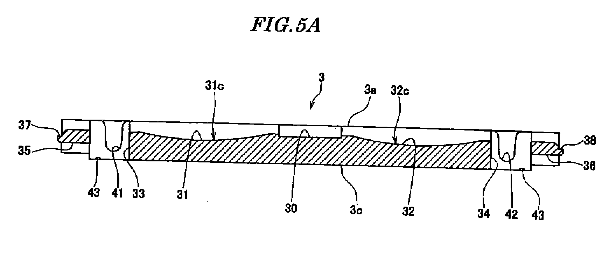

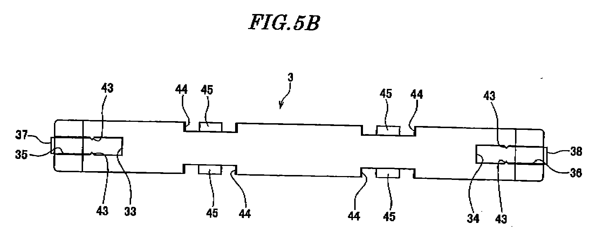

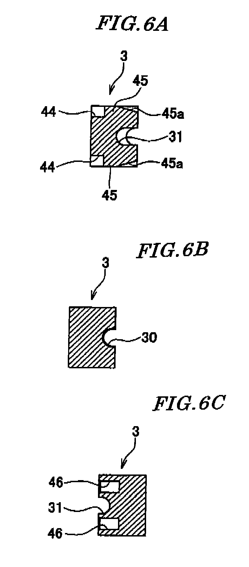

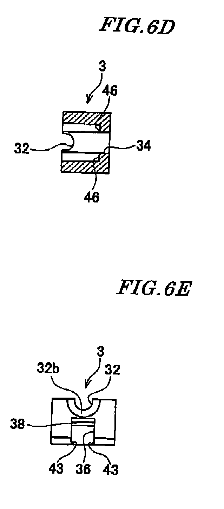

FIG. 4A is a rear view of the first housing component of the housing of the mechanical splice of FIG. 1. FIG. 4B is a plan view of the first housing component of the same. FIG. 5A is a cross-sectional view along the line B-B of FIG. 4B. FIG. 5B is a bottom view of the first housing component of FIG. 4. FIG. 6A is a cross-sectional view along the line C-C of FIG. 4B. FIG. 6B is a cross-sectional view along the line D-D of FIG. 4B. FIG. 6C is a cross-sectional view along the line E-E of FIG. 4B. FIG. 6D is a cross-sectional view along the line F-F of FIG. 4B. FIG. 6E is a side view of the first housing component of FIG. 4.

The first housing component 3 is substantially prismatic. The upper surface 3a of this component is provided with a sleeve receiving slot 30, a first optical fiber receiving slot 31, and a second optical fiber receiving slot 32, as shown in FIGS. 4 to 6. The first housing component 3 is formed with a green-colored transparent resin. The sleeve receiving slot 30 is positioned in the center of the upper surface 3a. One end of the first optical fiber receiving slot 31 leads to the sleeve receiving slot 30, and the other end reaches one of the lengthwise end faces of the first housing component 3. A narrowed portion 31a is formed at one end of the first optical fiber receiving slot 31 and a tapered surface 31b is formed at the other end. The width of the narrowed portion 31a of the first optical fiber receiving slot 31 is less than the width of the other portions and is slightly greater than the diameter of the optical fiber 17 (see FIG. 2). The tapered surface 31b is colored white by two-color molding. The first optical fiber receiving slot 31 has a curved portion 31c (see FIG. 2). One end of the second optical fiber receiving slot 32 leads to the sleeve receiving slot 30, and the other end reaches the other lengthwise end face of the first housing component 3. A narrowed portion 32a is formed at one end of the second optical fiber receiving slot 32, and a tapered surface 32b is formed at the other end. The width of the narrowed portion 32a of the second optical fiber receiving slot 32 is less than the width of the other portions and is slightly greater than the diameter of the optical fiber 18 (see FIG. 2). The tapered surface 32b is colored white in the same manner as the tapered surface 31b. The second optical fiber receiving slot 32 has a curved portion 32c (see FIG. 2).

A first lever receiving hole 33 and a first lever receiving slot 35 are formed in one end of the first housing component 3. The first lever receiving hole 33 extends from the upper surface 3a of the first housing component 3 to the lower surface 3c. The first lever receiving hole 33 leads to the first optical fiber receiving slot 31. The cross-sectional shape of the first lever receiving hole 33 is rectangular. Concave first bearing portions 41 are formed in an opposing fashion on the inner surfaces relative to the first lever receiving hole 33. Protrusions (restriction portions) 43 are formed in an opposing fashion on the mutually opposite inner surfaces of the first lever receiving hole 33. The first lever receiving slot 35 is formed in the bottom surface 3c of the first housing component 3. A first engagement pawl 37 is formed on one of the lengthwise end faces of the first housing component 3.

A second lever receiving hole 34 and a second lever receiving slot 36 are formed at the other end of the first housing component 3. The second lever receiving hole 34 extends from the upper surface 3a of the first housing component 3 to the lower surface 3c. The second lever receiving hole 34 leads to the second optical fiber receiving slot 32. The cross-sectional shape of the second lever receiving hole 34 is rectangular. Concave second bearing portions 42 are formed in an opposing fashion on the mutually opposite inner surfaces of the second lever receiving hole 34. Protrusions (restriction portions) 43 are formed in an opposing fashion on the mutually opposite inner surfaces of the second lever receiving hole 34. The second lever receiving slot 36 is formed in the bottom surface 3c of the first housing component 3. A second engagement pawl 38 is formed on the other lengthwise end face of the first housing component 3.

Four positioning holes 46 are formed in each of the two ends of the upper surface 3a of the first housing component 3. The four positioning holes 46 at one end of the first housing component 3 are arranged so as to surround the first lever receiving hole 33, and the four positioning holes 46 at the other end of the first housing component 3 are arranged so as to surround the second lever receiving hole 34. The positioning holes 46 extend in the height direction of the first housing component 3.

Two concavities 44 are formed in each of the front and rear surfaces of the first housing component 3. A protrusion 45 is formed on the bottom surface of each of the concavities 44. A sloped surface 45a is formed on the protrusion 45 (see FIG. 6A).

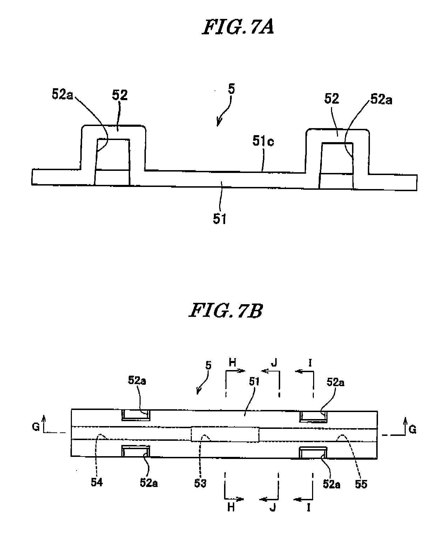

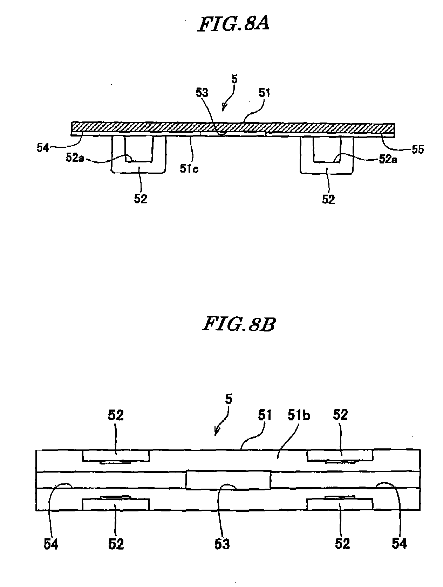

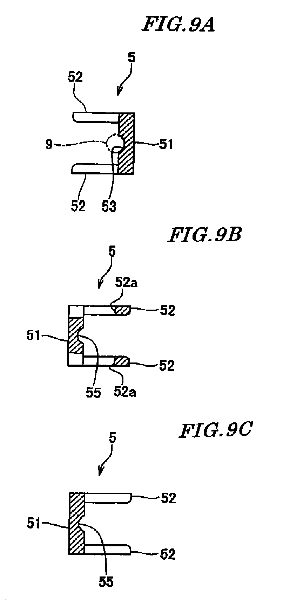

FIG. 7A is a rear view of the second housing component of the housing of the mechanical splice of FIG. 1. FIG. 7B is a plan view of the second housing component of the same. FIG. 8A is a cross-sectional view along the line G-G of FIG. 7B. FIG. 8B is a bottom view of the second housing component of FIG. 7. FIG. 9A is a cross-sectional view along the line H-H of FIG. 7B. FIG. 9B is a cross-sectional view along the line I-I of FIG. 7B. FIG. 9C is a cross-sectional view along the line J-J of FIG. 7B.

The second housing component 5 has a flat plate portion 51 and projecting pieces 52, as shown in FIG. 7 to 9. The second housing component 5 is formed with a colorless transparent resin.

A sleeve receiving slot 53, a third optical fiber receiving slot 54, and a fourth optical fiber receiving slot 55 are formed in the lower surface 51c of the flat plate portion 51. The sleeve receiving slot 53 is positioned in the center of the lower surface 51c. One end of the third optical fiber receiving slot 54 leads to the sleeve receiving slot 53, and the other end reaches one of the lengthwise ends of the second housing component 5. One end of the fourth optical fiber receiving slot 55 leads to the sleeve receiving slot 53, and the other end reaches the other lengthwise end face of the second housing component 5.

The projecting pieces 52 are coupled to the flat plate portion 51, and holes 52a are formed in the projecting pieces 52. The projecting pieces 52 are accommodated in the concavities 44 of the first housing component 3 (see FIGS. 4A and 4B). The holes 52a accept the protrusions 45 when the projecting pieces 52 are accommodated in the concavities 44. The projecting pieces 52 are thereby latched to the first housing component 3, and the second housing component 5 is coupled to the first housing component 3.

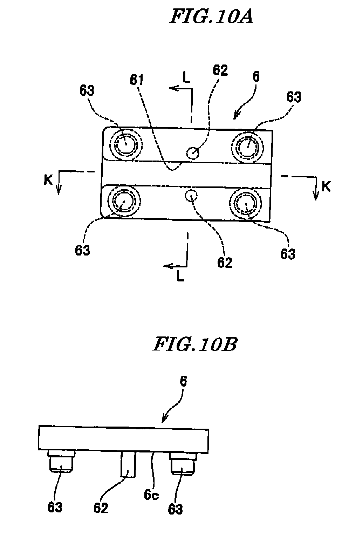

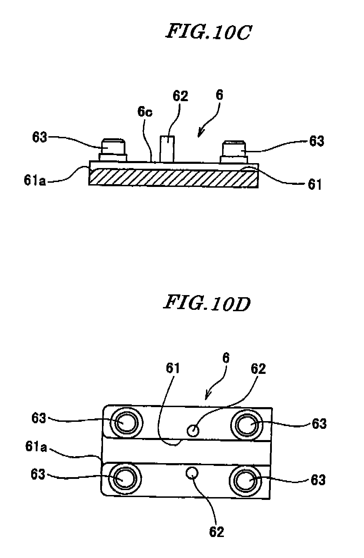

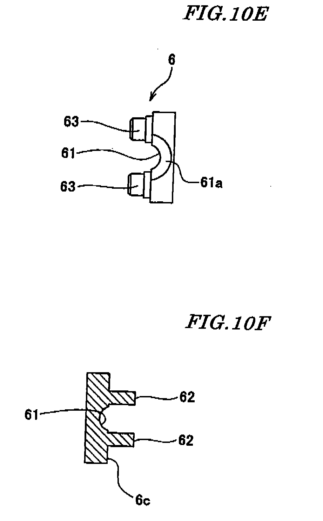

FIG. 10A is a plan view of the third housing component of the housing of the mechanical splice of FIG. 1. FIG. 10B is a front view of the third housing component of the same. FIG. 10C is a cross-sectional view along the line K-K of FIG. 10A. FIG. 10D is a bottom view of the third housing component of the same. FIG. 10E is a side view of the third housing component of the same. FIG. 10F is a cross-sectional view along the line L-L of FIG. 10A.

A fifth optical fiber receiving slot 61, an axial presser 62, and positioning pins 63 are formed in the lower surface 6c of the third housing component 6, as shown in FIG. 10. The third housing component 6 is formed with a green-colored transparent resin.

The fifth optical fiber receiving slot 61 extends from one lengthwise end to the other end of the third housing component 6. A tapered surface 61a is formed on one end of the fifth optical fiber receiving slot 61, and the tapered surface 61a is colored white by two-color molding.

The axial presser 62 is disposed within the first bearing portion 41 of the first housing component 3 (see FIG. 2A) when the third housing component 6 is fixed to the first housing component 3.

The positioning pins 63 are inserted into the positioning holes 46 at one end of the first housing component 3 (see FIG. 4B), and the third housing component 6 is accurately positioned with respect to the first housing component 3.

The third housing component 6 is fixed to one end of the first housing component 3 with an adhesive.

The fourth housing component 7 has the same configuration as the third housing component 6, and a description is therefore omitted.

The fourth housing component 7 has a sixth optical fiber receiving slot 71, an axial presser 72, and positioning pins 73, as shown in FIGS. 1 and 2.

A tapered surface 71a of one end of the sixth optical fiber receiving slot 71 is colored white by two-color molding.

The axial presser 72 is disposed within the second bearing portion 42 of the first housing component 3.

The positioning pins 73 are inserted into the positioning holes 46 at the other end of the first housing component 3 (see FIG. 4B)

The fourth housing component 7 is fixed to the other end of the first housing component 3 with an adhesive.

A first optical fiber insertion hole 11 is composed of the first optical fiber receiving slot 31 of the first housing component 3, the third optical fiber receiving slot 54 of the second housing component 5, and the fifth optical fiber receiving slot 61 of the third housing component 6 described above, as shown in FIG. 2. The first optical fiber insertion hole 11 accommodates an optical fiber 17.

A second optical fiber insertion hole 12 is composed of the second optical fiber receiving slot 32 of the first housing component 3, the fourth optical fiber receiving slot 55 of the second housing component 5, and the sixth optical fiber receiving slot 71 of the fourth housing component 7. The second optical fiber insertion hole 12 accommodates an optical fiber 18.

A sleeve insertion hole 13 is composed of the sleeve receiving slot 30 of the first housing component 3, and the sleeve receiving slot 53 of the second housing component 5. A sleeve (metal sleeve) 10 is accommodated in the sleeve insertion hole 13. The sleeve 10 is made of metal and is formed by rolling, for example. The sleeve 10 has a strand-receiving hole 101. The strand-receiving hole 101 is filled with a matching oil (not shown), and a tapered surface 10a is formed at both ends of the strand-receiving hole 101.

An optical fiber receiving hole 14 is composed of the first optical fiber insertion hole 11, the second optical fiber insertion hole 12, and the sleeve insertion hole 13.

A first pre-compression space 15 is composed of the curved portion 31c and the third optical fiber receiving slot 54, and a second pre-compression space 16 is composed of the curved portion 32c and the fourth optical fiber receiving slot 55.

The first and second levers 8 and 9 have mutually the same structure, as shown in FIG. 2, and the first lever 8 is therefore mainly described.

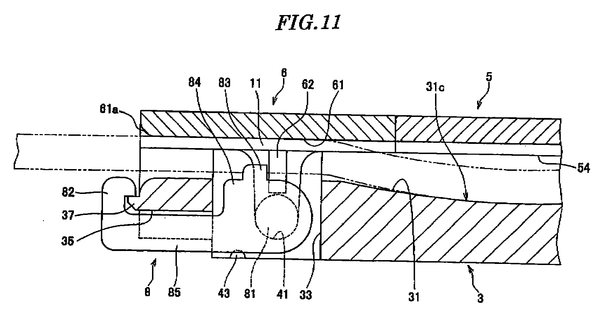

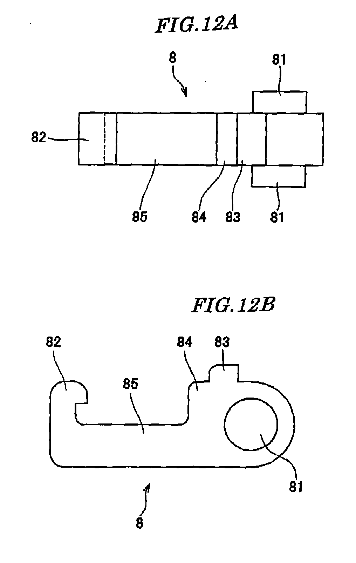

FIG. 11 is a cross-sectional view of the state in which the lever of mechanical splice of FIG. 1 is locked. FIG. 12A is a plan view of the lever of the mechanical splice of FIG. 1. FIG. 12B is a front view of the lever of the same.

The first lever (first movable member) 8 has a shaft portion 81, a hook portion (latching portion) 82, a pressing portion 83 (wherein a feeding portion and a presser portion are integrally formed), a convexity 84, and an arm portion 85, as shown in FIGS. 11 and 12.

The shaft portion 81 is cylindrical and is formed in the front and back surfaces of one end of the lever 8. The hook portion 82 is substantially in the form of a clasp and is formed at the other end of the lever 8. The pressing portion 83 is formed in the vicinity of the shaft portion 81. The convexity 84 is adjacent to the pressing portion 83, and the arm portion 85 is coupled with the shaft portion 81 and hook portion 82.

The first lever 8 is accommodated in the first lever receiving hole 33 at one end of the housing 2. The shaft portion 81 of the first lever 8 is supported by the first bearing portion 41 and is pressed down upon by the axial presser 62 so as to avoid shaking. The first lever 8 is thereby allowed to rotate about the center of the shaft portion 81.

A second lever (second movable member) 9 has a shaft portion 91, a hook portion (latching portion) 92, a pressing portion 93 (wherein a feeding portion and presser portion are integrally formed), a convexity 94, and an arm portion 95, as shown in FIG. 2.

The second lever 9 is accommodated in the second lever receiving hole 34 at the other end of the housing 2. The shaft portion 91 of the second lever 9 is supported by the second bearing portion 42 and is pressed down upon by the axial presser 72 so as to avoid shaking. In FIG. 2, the second lever 9 is in a position in which the optical fiber can be inserted. The hook portion 92 of the second lever 9 is not attached to a second engagement pawl 38. In this situation, the pressing portion 93 is retracted from the second optical fiber insertion hole 12, the pressing portion 93 and the convexity 94 make light contact with the protrusion 43, and the second lever 9 is kept from moving from the position in which the optical fiber can be inserted. The arm portion 95 is retracted from the second lever receiving slot 36. When the second lever 9 is in the position in which the optical fiber can be inserted, the optical fiber 18 can be inserted or removed from the second optical fiber insertion hole 12.

In FIG. 2, the first lever 8 is in the position in which the optical fiber is fixed. The hook portion 82 of the first lever 8 has engaged the first engagement pawl 37. The pressing portion 83 has entered the first optical fiber insertion hole 11. The arm portion 85 is accommodated in the first lever receiving slot 35. When the first lever 8 is in the position in which the optical fiber is fixed, the optical fiber 17 is pressed by the pressing portion 83 against the interior surface of the first optical fiber insertion hole 11, and the optical fiber 17 is therefore not easily removed.

Described next is the procedure of connecting the optical fibers 17 and 18 using the mechanical splice of this embodiment.

In advance of the connection procedure, the second housing component 5 is joined with the first housing component 3. The sleeve 10 is accommodated in the sleeve insertion hole 13. The coverings (not shown) of the distal ends of optical fibers 17 and 18 are removed and the strands (not shown) are exposed.

First, the positions of the two levers 8 and 9 are set to a position in which the optical fiber can be inserted.

Next, the optical fiber 17 is inserted into the first optical fiber insertion hole 11, and the optical fiber 18 is inserted into the second optical fiber insertion hole 12. Each of the strands of the optical fibers 17 and 18 is inserted into the strand-receiving hole 101 of the sleeve 10.

The two levers 8 and 9 are then rotated from the position in which the optical fiber can be inserted to the position in which the optical fiber is fixed.

In this state, the pressing portions 83 and 93 enter the optical fiber insertion holes 11 and 12, and the optical fibers 17 and 18 are advanced to the center portion of the housing 2. As a result, the strands of the optical fibers 17 and 18 make contact with each other. Therefore, the optical fibers 17 and 18 bend inside the first and second pre-compression spaces 15 and 16, and a force is created that presses the end faces of the optical fibers 17 and 18 together. The pre-compression acts as a force that causes the strands to constantly push against each other.

When the levers 8 and 9 rotate to the position in which the optical fiber is fixed, the hook portions 82 and 92 of the levers 8 and 9 engage the engagement pawls 37 and 38. In this condition, the pressing portions 83 and 93 of the levers 8 and. 9 forcefully press the optical fibers 17 and 18 against the inner surfaces of the first and second optical fiber insertion holes 11 and 12, and the optical fibers 17 and 18 are therefore fixed to the housing 2 and cannot be easily pulled out.

The connection of the optical fibers 17 and 18 is completed by the procedure described above.

The hook portions 82 and 92 of the levers 8 and 9 can be released from the engagement pawls 37 and 38 to undo the connection of the optical fibers 17 and 18.

Following are the effects of the mechanical splice of this embodiment.

When the levers 8 and 9 are rotated from a position in which the optical fiber can be inserted to a position in which the optical fiber is fixed, a mutual pressing force is created between the end faces of the strands of the optical fibers 17 and 18, and the optical fibers 17 and 18 can therefore be reliably connected without being affected by variations (temperature variations, and the like) in the external environment, for example.

When the levers 8 and 9 are in the position in which the optical fiber is fixed, the pressing portions 83 and 93 of the levers 8 and 9 forcefully press the optical fibers 17 and 18 against the inner surface of the optical fiber insertion holes 11 and 12. Therefore, the optical fibers 17 and 18 are reliably fixed to the housing 2, and the optical fibers 17 and 18 cannot be easily removed.

Also, since the first, second, third, and fourth housing components 3, 5, 6, and 7 constituting the housing 2 are molded with a transparent resin, and the strands of the optical fibers 17 and 18 can be easily inserted in the sleeve 10, and the work efficiency is improved.

In this embodiment, the levers 8 and 9 are adopted as the optical fiber fixing means, but the optical fiber fixing means is not limited to the levers 8 and 9. For example, a slider may be adopted that can reciprocate along the lengthwise direction of the housing, moving between a position in which the optical fiber can be inserted and a position in which the fiber is fixed.

In this embodiment, the pressing portions 83 and 93 of the levers 8 and 9 are configured so that the feeding portion and the presser portion are in an integral configuration, but no limitation is imposed thereby, and also possible is a configuration in which the feeding portion that sends the optical fiber to the center portion of the housing and the presser portion that presses the optical fiber against the housing and holds the optical fiber are separately provided.

The number of pressing portions 83 and 93 of the levers 8 and 9 may be one or more.

Also, a sleeve 10 is used in this embodiment, but the use of a sleeve 10 is not required. In this case, a strand-receiving hole is formed in the housing 2.

Described in the embodiments above is the case of a mechanical splice in which a pair of optical fibers is connected to each other, but the present invention may also be applied to a mechanical splice for connecting a plurality of pairs of optical fiber with each other (multifilament mechanical splice).

## Claims

1. A mechanical splice, comprising:
a housing for accommodating the end portion of a first optical fiber and the end portion of a second optical fiber to be connected thereto;
optical fiber fixing means for fixing to said housing said two optical fibers accommodated in said housing; and said optical fiber fixing means having:
a first movable member which is mounted on one end of said housing and which feeds the end portion of said first optical fiber to the end portion of said second optical fiber, and fixes the end portion of the first optical fiber to said housing when the first movable member has moved from a position in which the optical fiber can be inserted to a position in which the optical fiber is fixed; and
a second movable member which is mounted on the other end of said housing and which feeds the end portion of said second optical fiber to the end portion of said first optical fiber, and fixes the second optical fiber to said housing when the second movable member has moved from said position in which the optical fiber can be inserted to said position in which the optical fiber is fixed.

2. The mechanical splice according to claim 1, wherein said housing has a fiber-receiving hole for accommodating the end portions of said two optical fibers; and
said fiber-receiving hole has a first pre-compression space for bending the end portion of said first optical fiber, and a second pre-compression space for bending the end portion of said second optical fiber.

3. The mechanical splice according to claim 2, wherein said first and second movable members are both rotatable levers; and
said first movable member comprises:
a first engagement portion for engaging one end of said housing when the first movable member has rotated from said position in which the optical fiber can be inserted to said position in which the optical fiber is fixed,
a first feeding portion for biting into the covering of said first optical fiber midway through the rotation from said position in which the optical fiber can be inserted to said position in which the optical fiber is fixed, and feeding said first optical fiber to the end portion of said second optical fiber, and
a first pressing portion for pressing said first optical fiber against the internal peripheral surface of said fiber-receiving hole when the first movable member has rotated from said position in which the optical fiber can be inserted to said position in which the optical fiber is fixed; and
said second movable member comprises:
a second engagement portion for engaging the other end of said housing when the second movable member has rotated from said position in which the optical fiber can be inserted to said position in which the optical fiber is fixed,
a second feeding portion for biting into the covering of said second optical fiber midway through the rotation from said position in which the optical fiber can be inserted to said position in which the optical fiber is fixed, and feeding said second optical fiber to said end portion of the first optical fiber, and
a second pressing portion for pressing said second optical fiber against the internal peripheral surface of said fiber-receiving hole when the second movable member has rotated from said position in which the optical fiber can be inserted to said position in which the optical fiber is fixed.

4. The mechanical splice according to claims 2 or 3, wherein the metal sleeve for guiding said two optical fibers so that said strands of the two optical fibers make mutual contact is accommodated between said first pre-compression space and said second pre-compression space within said fiber-receiving hole.

5. The mechanical splice according to any of claims 1 to 4, wherein said first and second movable members have a hook portion for engaging an engagement pawl that is formed on said housing, when [the first and second movable members] have moved from a position in which the optical fiber can be inserted to a position in which the optical fiber is fixed.

6. The mechanical splice according to any of claims 1 to 5, said housing has a restriction portion for restricting the sliding of the first and second movable members disposed in the position in which the optical fiber can be inserted.
